# EUROPÄISCHE PATENTANMELDUNG

(11) **EP 3 872 144 A1**
(43) Veröffentlichungstag der Anmeldung: **01.09.2021**
(21) Anmeldenummer: 21154521.5
(22) Anmeldetag: 01.02.2021
(51) Int. Cl.: C09J 5/06, C09J 7/35, C09J 11/04, C09J 179/08, C08J 3/24, B29C 35/02, C09J 133/04

(54) **DURCH REIBUNGSHITZE AKTIVIERBARE KLEBEMATERIALELEMENTE ZUM BEFESTIGEN VON GEGENSTÄNDEN**

(30) Priorität: 26.02.2020 DE 102020105020; 12.01.2021 DE 102021100355
(71) Anmelder: fischerwerke GmbH & Co. KG, 72178 Waldachtal (DE)
(72) Erfinder: Haug, Willi, 72250 Freudenstadt Musbach (DE); Horn, Sebastian, 72184 Eutingen i.G. (DE); Schätzle, Joachim, 79341 Kenzingen (DE); Becker, Janina, 72250 Freudenstadt (DE); Freudigmann, Lars, 72072 Tübingen (DE)
(74) Vertreter: Suchy, Ulrich Johannes

(57) **Zusammenfassung**

Verwendung eines Klebematerialelementes zum Befestigen eines Gegenstands in einem Loch und/oder an einer Oberfläche jeweils von einem festen Substrat, wobei das Klebematerialelement ein plastisch und/oder elastisch formbeständiger Materialkörper, oder (ferner) eine Ampulle (im Befestigungsbereich auch als Patrone bezeichnet) oder ein Folienbeutel ist, und wobei das Klebematerialelement eine einkomponentig ausgeführte bei einer Temperaturerhöhung durch Polymerisation vernetzbare reaktive Materialmischung und ein partikuläres Reibkörpermaterial beinhaltet; wobei die Materialmischung des Klebematerialelementes
(i) optional durch rotatorische und/oder axiale Kräfte bei 41 oder mehr Grad Celsius bis zu 120 Grad Celsius vermehrt plastisch bis zähflüssig werdend
und in jedem Fall (ii) bei einer durch rotatorische und/oder axiale Kräfte hervorgerufenen Temperaturerhöhung auf mehr als 60 Grad Celsius, zu einem Duromer aushärtend ausgeführt ist; wobei das Klebematerialelement und der Gegenstand drehend und/oder unter axialem Drücken in das Loch ein- und/oder auf die Oberfläche aufgebracht wird; und verwandte Erfindungsgegenstände.

## Beschreibung

Die Erfindung betrifft die Verwendung eines Klebematerialelements zum Befestigen eines Gegenstandes in Löchern oder an Oberflächen jeweils von festen Substraten, insbesondere im Baubereich, sowie besondere Klebematerialelemente, die für diesen Zweck eingerichtet oder geeignet sind, jeweils wie nachstehend und in den Ansprüchen dargelegt.

Es gab bereits Versuche, hitzeaktivierbare polymerisierbare Materialien als Klebstoffe zum An- oder Einkleben von Gegenständen aus thermoplastischem Kunststoff auf ein Substrat durch mittels Drehung hervorgerufene Reibung zum Polymerisieren zu bringen und so die Gegenstände zu verkleben. So beschreibt US 4,551,189 mit mehreren Kammern ausgestattete Gegenstände, in deren Kammern unterschiedliche Komponenten eines zweikomponentigen Klebemittels eingebracht sind, die bei Drehung durch die axialen und rotatorischen Kräfte gemischt und erhitzt und so zur Polymerisation gebracht werden. DE 36 107 734 beschreibt ähnliche Kunststoffgegenstände, die bei Anwendung auf der dem Substrat zugewandten Seite spiralförmig einen nach außen verlaufenden Steg aufweisen. Im Zentrum ist eine hitzeaktivierbare Klebstoffkugel beispielsweise aus einem Epoxyharz und einem latenten Polyamidkatalysator eingebracht, die beim Drehen erhitzt und erweicht, durch den Steg und die Drehung nach außen verteilt und dabei schließlich zum ausgehärteten Klebstoff polymerisiert wird.

Bekannt sind auch 1-Komponenten-Epoxidpulver wie Epikote Trac 06720 von Hexion, das ein thermoplastisches Preforming bei 90 bis 100 °C erlaubt und bei 120 °C und mehr duroplastisch aushärtet.

Der Erfindung lag die Aufgabe zugrunde, für die Verwendung zum Befestigen von Gegenständen in Löchern oder ferner an Oberflächen von festen Substraten neue Klebematerialien bereitzustellen, die schließlich zu Duromeren reagieren und so das Verkleben von Gegenständen durch Verkleben ermöglichen, sowie die Verwendung dieser Klebematerialien.

[A] Die Aufgabe wird gelöst durch die Verwendung eines Klebematerialelementes zum Befestigen eines Gegenstands in einem Loch und/oder an einer Oberfläche jeweils von einem festen Substrat, wobei das Klebematerialelement ein bei Umgebungstemperatur und Temperaturen (mindestens geringfügig) oberhalb der Umgebungstemperatur, vorzugsweise von bis zu 40-80 Grad Celsius, insbesondere bis zu 40 Grad Celsius, plastisch und/oder elastisch formbeständiger (in diesem Sinne also fester) Materialkörper, oder (ferner) eine Ampulle (im Befestigungsbereich auch als Patrone bezeichnet) oder ein Folienbeutel ist, und wobei das Klebematerialelement eine (bezüglich der an einer Polymerisation teilnehmenden Bestandteile) einkomponentig ausgeführte bei einer Temperaturerhöhung durch Polymerisation vernetzbare reaktive Materialmischung und.ein (insbesondere keramisches, metallisches, halbmetallisches, halbmetalloxidisches, metalloxidisches, halbmetallhydroxidisches und/oder metallhydroxidisches oder aus einem (ggf. anderweitigen) amorphen Stoff bestehendes) partikuläres Reibkörpermaterial (Schleifstoff, Schleifmaterial oder Hartstoff); vorzugsweise mit einer Mohshärte von 7 oder mehr; beinhaltet, wobei die Stoffmischung des Klebematerialelementes
(i) optional reibungsbedingt durch rotatorische und/oder axiale Kräfte bei 41 oder mehr Grad Celsius bis zu 120 Grad Celsius, vorzugsweise von 60 bis 110 oder bis 100 Grad Celsius, vermehrt plastisch bis zähflüssig werdend
und in jedem Fall (ii) bei einer ganz oder größtenteils (= maßgeblich, was bedeutet, dass nur durch die durch rotatorische und/oder axiale Kräfte hervorgerufene Reibung oder durch Reibung und Exothermie der Reaktion bei Reibung die Temperatur des Klebematerialelementes erhöht wird) durch rotatorische und/oder axiale Kräfte hervorgerufenen (ggf. weiteren) Temperaturerhöhung auf mehr als 60 Grad Celsius, insbesondere auf 65 Grad Celsius oder mehr, vorzugsweise von 70 bis 150 Grad Celsius oder von 120 bis 180 Grad Celsius, zu einem Duromer aushärtend ausgeführt ist; und wobei das Klebematerialelement und der Gegenstand drehend (um seine Längsachse) und/oder unter axialem Drücken, insbesondere unter Drehen und axialem Drücken, in das Loch ein- und/oder auf die Oberfläche aufgebracht werden.

Die Erfindung betrifft auch ein Klebematerialelement in Form eines plastisch und/oder elastisch formbeständigen Materialkörpers, welcher bei Umgebungstemperatur und Temperaturen (mindestens geringfügig) oberhalb der Umgebungstemperatur plastisch und/oder elastisch formbeständig ist, wobei das Klebematerialelement eine (bezüglich der an einer Polymerisation teilnehmenden Bestandteile) einkomponentig ausgeführte bei einer Temperaturerhöhung durch Polymerisation vernetzbare reaktive Materialmischung und.ein - insbesondere keramisches, metallisches, halbmetallisches, halbmetalloxidisches, metalloxidisches, halbmetallhydroxidisches, metallhydroxydisches oder aus einem (ggf. anderweitigen) amorphen Stoff bestehendes - partikuläres Reibkörpermaterial beinhaltet; wobei die Materialmischung des Klebematerialelementes
(i) optional reibungsbedingt durch rotatorische und/oder axiale Kräfte bei 41 oder mehr Grad Celsius bis zu 120 Grad Celsius, vorzugsweise von 60 bis 110 oder bis 100 Grad Celsius, vermehrt plastisch bis zähflüssig werdend;
und in jedem Fall (ii) bei einer ganz oder großenteils durch rotatorische und/oder axiale Kräfte hervorgerufenen Temperaturerhöhung auf mehr als 60 Grad Celsius, insbesondere auf 65 Grad Celsius oder mehr, vorzugsweise von 70 bis 150 Grad Celsius oder von 120 bis 180 Grad Celsius, zu einem Duromer aushärtend ausgeführt ist.

Vor- und nachstehend (auch in den Ansprüchen) können allgemeinere Begriffe oder Merkmale durch jeweils spezifischer (insbesondere nachfolgend) genannte Definitionen einzeln, zu mehreren oder alle ersetzt werden, was zu spezifischen, insbesondere bevorzugten, Ausführungsformen der Erfindung führt.

Wo "ein" oder "eine" verwendet wird, ist dies (sofern nicht anders, beispielsweise durch Voranstellen von "mindestens", ersichtlich) in erster Linie als der unbestimmte Artikel zu verstehen und beinhaltet "ein (in Zahlen: 1) oder mehrere" wie auch nur ein(e) (in Zahlen: 1). Anders ausgedrückt, bedeutet "ein" oder "eine" "ein" ("1") oder "ein(e) oder mehr, z.B. zwei oder drei oder vier".

Vor- und nachstehend bedeuten Anteils- oder Gehaltsangaben in Prozent jeweils Gewichtsprozent ("Gew.-%") oder den relativen Gewichtsanteil, soweit nicht anders angegeben, bezogen auf alle Inhaltsstoffe eines erfindungsgemäß verwendeten bzw. erfindungsgemäßen Klebematerialelements (ohne Verpackungsmaterial), wenn nicht anders angegeben oder ersichtlich. Die Anteile aller Komponenten und Bestandteile zusammen ergeben dabei 100 Gew.-%.

"Beinhalten" oder "umfassen" bedeutet, dass neben den genannten Komponenten oder Merkmalen noch andere vorhanden sein können, steht also für eine nicht abschließende Aufzählung, im Gegensatz zu "bestehen(d) aus", das eine abschließende Aufzählung der bei seiner Verwendung aufgezählten Komponenten oder Merkmale bedeutet. In Ausführungsformen der Erfindung kann "beinhalten" oder "umfassen" durch "bestehen(d) aus" ersetzt werden.

Wo das Attribut "ferner" erwähnt wird, bedeutet dies, dass Merkmale ohne dieses Attribut stärker bevorzugt sein können.

"Und/oder" bedeutet, dass die genannten Merkmale/Substanzen jeweils alleine oder in Kombination von zwei oder mehr der jeweils genannten Merkmale/Substanzen vorliegen können.

Unter einem Klebematerialelement ist insbesondere ein pfropfen- oder klumpenförmiger Materialkörper, vorzugsweise in Form eines länglichen, vorzugsweise zylindrischen Materialkörpers oder ferner in Form eines scheibenförmigen, lochscheibenförmigen, hülsenförmigen, quaderförmigen, klumpen- oder kugelförmigen oder bandförmigen Materialkörpers, zu verstehen. Insbesondere sind für das Aufbringen von Gegenständen klumpen- oder kugelförmige oder scheibenförmige Materialkörper oder , angebracht an Verankerungselementen, die in (insbesondere Bohr-) Löcher eingebracht werden, scheiben-, lochscheiben oder hülsenförmige Klebematerialelemente, oder, insbesondere für das Einbringen von Verankerungselementen in (insbesondere Bohr-) Löcher längliche, wie vorzugsweise zylinderförmige, Klebematerialelemente vorgesehen - letztere haben vorteilhaft einen Durchmesser senkrecht zu ihrer Längsachse, der zum Durchmesser des jeweiligen Lochs passt oder (vorzugsweise geringfügig, beispielsweise 1 bis 3 mm) kleiner ist, was das Einführen erleichtert - so können sie besonders einfach in (insbesondere Bohr-) Löcher eingebracht werden. Beispielsweise können die Materialkörper eine Länge von 30 bis 100, z.B. von 40 bis 60 mm aufweisen und einen 2 bis 24, insbesondere von 6 bis 14, mm haben, z.B. einen Durchmesser von 9,5; 10; 11,5; 12; 13,5; oder 14 mm, passend für oder geringfügig kleiner als die jeweils zu befüllenden Bohrlöcher. Vorteilhaft sind die Dimensionen der Klebematerialelemente und der Verankerungselemente derart ausgewählt, dass sie zusammen zu einer abschnittsweisen oder vollständigen Füllung der Löcher führen. Die Materialelemente sind dabei vorzugsweise massiv (nicht innen hohl) ausgebildet, was die Herstellung und Anwendung besonders leicht macht.

Bei der erfindungsgemäßen Verwendung zum Befestigen eines Gegenstands in Löchern handelt es sich bei dem Substrat in erster Linie um ein Bausubstrat, beispielsweise Wandungen, Decken, Böden oder Mauerwerk, z.B. aus Stein oder Ziegelstein, Beton oder anderen mineralischen Baumaterialien, oder ferner aus Kunststoff, aus Metall (einschließlich offenporigem Metall, vorzugsweise einer aufgeschäumten Aluminiumlegierung), aus Keramik, aus glasierter Keramik oder aus Holz. Bei den Löchern handelt es sich um Spalten oder Löcher, die vorzugsweise (z.B. durch Bohren oder Platzhalter während des Gießens von aushärtenden Materialien wie Beton) mit Absicht hervorgebracht sind, insbesondere um Bohrlöcher.

Bei der erfindungsgemäßen Verwendung zum Befestigen eines Gegenstandes (insbesondere eines Klebebolzens) an einer Oberfläche kann das Substrat ein Bausubstrat wie gerade definiert oder ein anderes (vorzugsweise feststehendes, z.B. als Wand, Decke oder Boden eines Gebäudes) Substrat, z.B. aus Kunststoff, Metall (insbesondere offenporigem Metall, wie aufgeschäumte Aluminiumlegierungen), Keramik, glasierter Keramik oder ferner Holz sein.

Die zu befestigenden Gegenstände sind aus einem beliebigen Material, beispielsweise aus Kunststoffen oder insbesondere aus Keramik, einem Faserverbundwerkstoff, wie einem Carbonmaterial (CFK), einem Basaltfaserverbundmaterial oder einem Glasfaserverbundmaterial (GFK) (z.B. als Glasfaserstab) oder vor allem aus Metall (was auch Metalllegierungen einschließt) ausgebildet. Als besonders bevorzugt sind in der Befestigungstechnik im Bauwesen übliche Verankerungselemente mit außenseitigem Gewinde, beispielsweise Gewindestangen, Bolzen, Schrauben, Hinterschnittanker, Bohranker (insbesondere Stahlanker) oder Klebebolzen, oder ferner mit innenseitigem Gewinde wie Muttern zu verstehen.

Vorteilhaft weisen die Verankerungselemente für den Fall bzw. im Falle der Verwendung im Loch, insbesondere Bohrloch, am substratzugewandten Ende eine Dachspitze oder allgemeiner eine Spitze ausgebildet als Polyeder mit polygonaler Grundfläche, bspw. eine pyramidenförmige Spitze oder eine mehrkantige Spitze, da dies die Reibung erhöht, auf, die ein gutes Durchdringen, Zermahlen und reibungsbedingtes Erhitzendes Klebematerialelementes vereinfachen. Die Verankerungselemente können vorteilhaft einen etwas kleineren Durchmesser als die Löcher, insbesondere Bohrlöcher aufweisen, so dass hinreichend Platz ist für das Material der Klebematerialelemente ist.

Üblicherweise werden im Bauwesen Verankerungselemente, insbesondere in Form von Gewindestangen, mit rechtsdrehendem Außengewinde ausgestattet, da sie in der Regel mittels rechtsdrehender Vorrichtungen wie mittels eines elektrischen Schraubers (z.B. Bohrmaschine) oder vorzugsweise mittels eines Bohrhammers schlagend und drehend eingesetzt werden. Bei der bevorzugten erfindungsgemäßen Verwendung zur Befestigung von Verankerungsmitteln in Bohrlöchern ist es jedoch von Vorteil, wenn Gewindedrehsinn und Drehsinn der zum Drehen verwendeten Vorrichtung, wie Schrauber oder Bohrhammer, zueinander entgegengesetzt sind, insbesondere so, dass das Einbringen des Verankerungselementes in erster Linie durch Krafteinwirkung in Richtung des Substrates, in dem das Verankerungselement befestigt werden soll, erfolgt. Die Drehung entgegen des Sinnes des Gewindes führt dann zum einen dazu, dass Material des Klebematerialelementes nicht aus dem Loch hinaus, sondern darin gehalten und/oder sogar in dieses hineingefördert wird, zum anderen zu erhöhter Reibung und damit stärkerer Temperaturerhöhung für die Polymerisationsreaktion zum Duromer.

Insbesondere ist somit ein bevorzugter Gegenstand bei der erfindungsgemäßen Verwendung ein Verankerungselement mit Außengewinde im Gegensinn zum Drehsinn des Gegenstandes (d.h. v.a. im Gegensinn zum Drehsinn von dessen Gewinde) beim Einbringen in ein (insbesondere Bohr-) Loch, beispielsweise eine Gewindestange, ein Bolzen, eine Schraube oder ein Bohranker mit (mindestens im Verankerungsbereich) Linksgewinde insbesondere bei rechtsdrehendem elektrischem Schrauber wie rechtsdrehender Bohrmaschine mit Rechtsgewinde bei linksdrehendem elektrischem Schrauber wie rechtsdrehender Bohrmaschine. Bohrmaschine kann auch Schlagbohrmaschine bedeuten.

Alternativ kann bei der erfindungsgemäßen Verwendung ein Verankerungselement mit Rechtsgewinde eingesetzt werden, das jedoch mittels einer linksdrehenden Vorrichtung wie eines elektrischen Schraubers oder Bohrhammers in ein (insbesondere Bohr-) Loch eingebracht wird.

Alternativ kann im Falle eines drehend in einem (insbesondere Bohr-) Loch zu befestigenden Verankerungselements eine Hülse vorgesehen sein, die Teil des Verankerungselements ist und relativ zu und um einen Schaft des Verankerungselements drehbar ist, wie dies von Hinterschnittankern, insbesondere von selbstschneidenden Hinterschnittankern wie den Hilti HDA bekannt ist. Das Material des Klebematerialelementes ist in diesem Fall insbesondere an der Hülse und/oder am Schaft angeordnet, so dass das Klebermaterialelement gemeinsam mit dem Verankerungselement einer Verpackung entnommen und in ein Loch eingebracht werden kann. Das Material des Klebematerialelements kann einstückig oder mehrteilig sein. Zur Verankerung kann der Schaft im Loch und/oder die Hülse relativ zum Schaft um den Schaft im Loch gedreht werden, wodurch Reibung entsteht, so dass die Reibungswärme die Temperatur des Verklebungselements erhöht und so die Aushärtung zum Duromer initiiert und bewirkt wird, wobei gegebenenfalls auch die entstehende Exothermie zur Temperaturerhöhung und mindestens weitgehenden Durchhärtung beitragen kann.

Bei der erfindungsgemäßen Verwendung zum Befestigen eines Gegenstandes an einer Oberfläche wird der auf der dem Substrat zugewandten Seite mit einem Klebematerialelement beaufschlagte Gegenstand unter Rotation (Drehen) (parallel zur zu beklebenden Oberfläche) und Kraftaufwendung in Richtung der zu beklebenden Oberfläche auf diese aufgebracht, wobei durch die Reibungswärme die Temperatur des Verklebungselements erhöht und so die Aushärtung zum Duromer initiiert und bewirkt wird, wobei gegebenenfalls auch die entstehende Exothermie zur Temperaturerhöhung und mindestens weitgehenden Durchhärtung beitragen kann.

Hierbei kann es vorteilhaft sein, dass der Gegenstand auf der anzuklebenden Oberfläche (Reibschweißfläche) mit Vorsprüngen (z.B. Noppen, Stege, radiale oder anderweitig angeordnete stegförmige Vorsprünge und/oder ein spiralförmig vom zentralen Bereich bis außen (= maximal bis zur Außenkante der anzuklebenden Oberfläche) verlaufender Steg, der bei Drehung auf der Oberfläche des zu beklebenden Substrates im geeigneten Sinne (oder zur Reibungserhöhung im Gegensinne) das Material eines zentral aufgebrachten Verklebungselementes nach außen verteilt), wobei vorteilhaft an oder im Bereich der äußeren Randkante ein zur zu beklebenden Oberfläche ausgerichteter (z.B. ringförmig) geschlossener Steg vorgesehen sein kann, der das Entweichen des durch Wärme aktivierten Materials des Klebematerialelements weitgehend oder vollständig verhindert. Vorteilhaft ist das Volumen des Klebematerialelementes mindestens derart bemessen, dass es den Raum zwischen aufzuklebendem Gegenstand und Oberfläche des Substrates vollständig ausfüllt, um eine vollflächige Verklebung zu gewährleisten.

Das Klebematerialelement beinhaltet eine bei Umgebungstemperatur, worunter insbesondere -30 bis 80 °C, vorzugsweise -25 bis 50 oder bis 40 °C zu verstehen ist, insbesondere Raumtemperatur, vernetzbare reaktive Materialmischung (beispielsweise einem Preform oder einem Binderpulver), und ist plastisch oder ferner elastisch verformbar (in diesem Sinne also körperhaft fest und formstabil, beispielsweise bei der Handhabung von Hand). So kann es beispielsweise gut in Löcher, wie Bohrlöcher, eingebracht werden.

Sofern das Klebematerialelement ein Binderpulver beinhaltet, ist dieses im Klebematerialelement formstabil oder plastisch gebunden, beispielsweise in versinterter oder gepresster oder anderer Form verfestigt oder indem die Binderpulverpartikel auf andere Weise miteinander und mit anderen Bestandteilen des Klebematerialelementes verklebt oder daran gebunden sind.

Die einkomponentig ausgeführte vernetzbare reaktive Materialmischung, z.B. ein Preform (als in allen Ausführungsformen der Erfindung bevorzugte Variante) oder Binderpulver, kann in eine (vorzugsweise (beispielsweise durch Zuschmelzen) verschlossene) Ampulle, beispielsweise aus Glas oder Kunststoff, vorzugsweise aus Glas, eingefüllt sein. Bei der Anwendung insbesondere im (Bohr-) Loch kann durch die Reibung das zersplitternde Wandmaterial der Ampulle auch zur Reibung und zur Entstehung von Reibungswärme beitragen.

Alternativ kann die vernetzbare reaktive Materialmischung in einen (vorzugsweise (beispielsweise durch Verschweißen oder Verkleben) verschlossenen) Folienbeutel, beispielsweise aus Kunststoff, Metallfolie, metallbedampftem Kunststoff oder zwei oder mehr dieser Materialien) eingefüllt sein. Auch hier kann das Folienmaterial im Anwendungsfalle zur Entstehung von Reibungswärme beitragen.

Das in einem Klebematerialelement in einer erfindungsgemäß verwendeten einkomponentig ausgeführten vernetzbaren reaktiven Materialmischung vorliegende Material beinhaltet ein (beispielsweise durch thermische Vorbehandlung gemäß Variante (i) in ein (thermoplastisches) Preform umwandelbares) Binderpulver oder ein anderweitiges (bei Raumtemperatur festes und bei höheren Temperaturen erweichendes) aufschmelzbares Material, wobei das Binderpulver oder anderweitige aufschmelzbare Material insbesondere kristalline, teilweise kristalline, amorphe (z.B. glasartige) oder thermoplastische Reaktanden und gegebenenfalls Katalysatoren für die Duromerbildung durch Erwärmen gemäß Variante (ii) (Vernetzung) umfasst, Insbesondere wenn Variante (i) und Variante (ii) bei der erfindungsgemäßen Anwendung beide bei den erfindungsgemäßen Verwendungen teilhaben sollen sind die Reaktanden solche, die zur Herstellung von sogenannten Preforms (Formkörper mit thermoplastischen Eigenschaften) bei mäßigem Erwärmen (z.B. gemäß Variante (i) oder bei vorheriger Herstellung der Klebematerialelemente) führen, die dann bei stärkerem Erwärmen gemäß Variante (ii) zu duromeren Körpern aushärten. Die reaktive Materialmischung soll als Einkomponentensystem bei Temperaturen bis hinauf zu 50 °C oder bis hinauf zu 40 °C lagerstabil sein, bei Temperaturen bis höchstens 110 °C, vorzugsweise bis 100 °C möglichst plastisch verformbar (ggf. auch unter Bildung eines Thermoplasten als Preform bei Erwärmen gemäß Variante (i)) sein, jedoch bei noch höheren Temperaturen bis beispielsweise 180 °C aushärten.

Plastisch verformbar bedeutet dabei "verformbar durch irreversibles Fließen", wie beispielsweise beim Erwärmen von Thermoplasten.

Vernetzbar bedeutet, dass bei der erfindungsgemäßen Verwendung bei der Temperaturerhöhung der reaktiven Materialmischung wie unter (ii) eine Vernetzung zu einem Duromer stattfindet, sei es nach vorheriger Preform-Bildung gemäß Variante (i) oder gemäß Variante (ii).

Wo von (i), (ii), Variante (i) oder Variante (ii) die Rede ist, bedeutet das jeweils die Variante gemäß obigem Absatz [A] oder darunterfallende Versionen in anderen Erfindungsverkörperungen.

Bei der durch Polymerisation vernetzbaren reaktiven Materialmischung handelt es sich vorzugsweise um eine der im Folgenden genannten:
a) Ein (vorzugsweise als (z.B. verpresstes oder gesintertes) Binderpulver oder als Preform ausgeführtes) Vinylesterharz, das bei Temperaturen insbesondere von -40 bis 80 °C, vorzugsweise von bis hinauf zu 50 °C, insbesondere von bis hinauf zu 40 °C plastisch und/oder elastisch verformbar wie oben unter der (allgemein in dieser Offenbarung geltenden) Definition der einkomponentig ausgeführten Materialmischung definiert ist und ein bei den genannten Temperaturen glasartiges oder kristallines Olefinharz, insbesondere ein Vinylesterharz, vorzugsweise ein Di-Acrylat oder Di-Methacrylat eines Diols, wie eines Bisphenols, vorzugsweise pulverförmiges, mindestens teilweise kristallines Bisphenol-A-Dimethacrylat, und einen Härter, beispielsweise mit einem Initiator ausgewählt aus einem radikalbildenden (vorzugsweise pulverförmigen oder insbesondere kristallinem) Peroxid, oder einer radikalbildenden Azoverbindung, die sich jeweils erst bei Temperaturerhöhung unter Radikalbildung zersetzen, und vorzugsweise gemischt sind mit einem pulverförmigen Phlegmatisierungsmittel, beispielsweise Gips, Calciumphosphat, Phthalaten, wie Dicyclohexylphthalat, o- oder m-Terphenyl oder einem Benzoesäureester, wie Phenylbenzoat, p-tert-butyl-phenylbenzoat, Glycerintribenzoat, Ethylenglykoldibenzoat oder Triethylenglykoldibenzoat, insbesondere phlegmatisiertes Dibenzoylperoxid oder eine Mischung von zwei oder mehr davon (z.B. mit 30 bis 80 % Peroxidanteil), das sich bei Temperaturen oberhalb von etwa 70 °C zersetzt und so die Polymerisation initiiert; aufweist. Der Anteil des Olefinharzes liegt dabei vorzugsweise bei 10 bis 70 Gew._%, insbesondere bei 25 bis 60 Gew.-%, und der des Härters bei 0,1 bis 40 Gew.-%, beispielsweise bei 0,5 bis 30 Gew.-%.
   Als Initiator (Radikalstarter) für die Härtung der erfindungsgemäßen Klebematerialelemente verwendete (radikalbildende) Peroxide sind z.B. organische Peroxide, wie Diacylperoxide, z.B. Dibenzoylperoxid ("Benzoylperoxid"), Ketonperoxide, wie Methylethylketonperoxid oder Cyclohexanonperoxid, oder Alkylperester, wie tert-Butylperbenzoat, anorganische Peroxide, wie Persulfate oder Perborate, Di(4-tert-butyl-cyclohexyl)-peroxydicarbonat, Diacetyl-peroxidicarbonat, Dimyristylperoxydicarbonat, Dilauroyl-peroxid, Didecanoylperoxid, Dicumylperoxid, Di-(2-tert-butyl-peroxyisopropyl)-benzol oder 2,5-Dimethyl-2,5-di(tert-butylperoxy)-hexin-3, als radikalbildende Azoverbindungen können z.B. 2,2'-Azodiisobutyronitril oder 2,2'-Azodi-(2-methylbutyronitril) genannt werden. Mischungen von zwei oder mehr oder allen der Radikalstarter sind möglich.
b) Ein epoxybasiertes vernetzbares reaktives Material oder insbesondere (beispielsweise gepresstes oder gesintertes) Binderpulver oder thermoplastisches Preform-Material, vorzugsweise als bis ungefähr hinauf zu 40 bis 80 °C im Sinne der obigen Definition plastisch und/oder elastisch verformbares Gemisch, beinhaltend Epoxyidharz und Härter; es handelt sich vorzugsweise um pulverförmige Gemische aus Epoxidverbindungen mit mindestens zwei Epoxidgruppen pro Molekül und einem Härter, welcher vorzugsweise ein latenter Härter ist, beispielsweise Säureanhydride oder Imidazolderivate oder Metallkomplexverbindungen; bevorzugt sind insbesondere solche Mischungen mit einer Preforming-Temperatur von 60 bis 110 °C oder insbesondere 80 bis 110 °C und einer duroplastischen Aushärtetemperatur von 110 oder mehr Grad Celsius, insbesondere von 120 °C bis 180 °C, beispielsweise ein unter dem Handelsnamen Epikote TRAC 06720 bekanntes bei Temperaturen unter 80 °C im obigen Sinne festes Epoxidmaterial der Firma Hexion (Hexion Inc., Duisburg-Mederich, Deutschland), oder eine Epoxid-Feststoffharz-Formulierung mit Bisphenol-A/Epichlorhydrinbasiertem Epoxidharz und einem (beispielsweise 4 gew.-%-igen) Imidazol-Addukt als Härter (CAS-Nummer 25036-25-3) (beispielsweise Epon Resin 2002 der Firma Hexion und als Härter (beispielsweise 4 Gew.-%) Epon Curing Agent P-101), oder ferner sonstige Epoxid-Feststoffharzformulierungen auf Basis von Bisphenol F, Bis-(epoxy-cyclohexyl)methylcarboxylat (CAS: 2386-87-0), oder insbesondere festen Epoxy-Novolaken (wie DEN 438 oder DEN 431 der Firma Dow Chemicals), festen Biphenylyl-Epoxyharzen wie YX-4000 von Mitsubishi (4,4'-Di(glycidyloxy)-3,5,3',5'-tetramethyl-1,1'-biphenylyl), festen Glycidyloxy-Kresolnovolaken wie N-665 von Dic Corporation, oder festen DCPD-Novolaken wie HP 7200 (Poly(phenylenoxide)-novolak, glycidyliert; das Produkt einer Polyaddition von Dicyclopentadien (DCPD) und Phenol, glycidyliert); vorzugsweise jeweils in Gegenwart von Härtern für die Polyaddition wie einem aromatischen Di- oder Poly-Amin, z.B. Hexamethylenetetramin, m-Phenylendiamin oder 4,4'-Diaminodiphenylmethan, einem Amin-Addukt mit Epoxyharz wie Ajicure PN-40J von Ajinomoto, einem 2-Methylimidazol-triazinhärter wie Curezol 2MZ-Azin von Evonik (Formel siehe unten bei *), insbesondere einer Kombination des Aminadduktes und des 2-Methylimidazol-triazinhärters, oder einem Säureanhydrid, z.B. Phthalsäureanhydrid, Hexahydrophthalsäureanhydrid, Methylhexahydrophthalsäureanhydrid, oder Maleinsäureanhydrid, von anionischen Initiatoren für die Homopolymerisation von Epoxidharzen, wie tertiären Aminen, z.B. N,N'-Dimethylpiperidin oder Benzyldimethylamin, Imidazolen, wie 1-Ethylimidazol, ferner 2-Methylimidazol oder 2-Methyl-4-methylimidazol, insbesondere in Mischung mit z.B. Hexamethyalentetramin, oder Imidazoliumsalzen, oder latenten (erst beim Erwärmen aktivierten) kationischen Initiatoren für die Homopolymerisation, wie Benzylthiolaniumsalzen, wie "PI 55" der nachfolgend unter)** gezeigten Formel, Napththoylmethylthiolaniumsalzen, Naphthoylmethylsulfoniumsalzen oder Sulfoniumsalzen auf Cumarinbasis, wie LC80 oder LC100 von GenieChem. *) 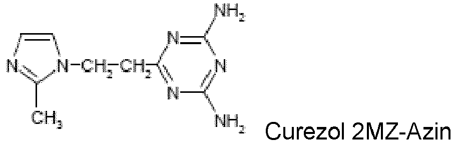 **) 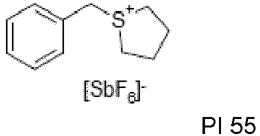
c) Eine vernetzbare reaktive Materialmischung, vorzugsweise als Binderpulver (dann kristalline oder teilkristalline oder amorphe) Formulierung auf Polyimid-, insbesondere Bismaleinimidharzbasis, wie insbesondere auf Basis amino-terminierter Präpolymere wie langkettigen Sulfonether-Diaminen oder vorzugsweise auf Basis von 4,4'-Bismaleinimidodiphenylmethan (MDAB; CAS 13676-54-5), 2,4-bismaleinimidotoluol (TDAB, CAS: 6422-83-9), Maleinimid-terminiertem Butylnitrilkautschuk (MTBN) oder ein Harz auf Phenylindanbasis (BMPI, 5(6),4'-Bismaleinimido-1,3,3-trimethyl-phenylindan, für die beiden letzteren siehe Dissertation Stefan Czwienczek, Lehrstuhl für Makromolekulare Stoffe der Technischen Universität München, angenommen am 19.02.2007), Seiten 109 bis 113; jeweils mit vorgebildeter Di- oder Polyimid-Konfiguration, die durch Polymerisation über ein oder zwei oder mehrere Mechanismen ausgewählt beispielsweise aus Maleinimid-Maleinimid-Vernetzung (Homopolymerisation), Michael-Addition (Maleinimid-Amin-Kettenverlängerung), und/oder eine ringöffnende Aminolysereaktion zum Duromeren ausgehärtet werden kann, oder durch Copolymerisation mit ein oder mehreren Comonomeren ausgewählt insbesondere aus Bis(propenylphenyloxy)-, Allylphenol- (wie o,o-Diallylbisphenol-A-) oder Allylphenylbasierten Comonomeren, CTBN-Kautschuk (siehe Seite 98 ff Dissertation).
d) Ein Cyanatester, der in Gegenwart von in Form insbesondere von carboxylierten oder chelatisierten Übergangsmetallkatalysatoren, wie Übergangsmetall-Acetylacetonat-Koordinationsverbindungen (insbesondere mit Mn²⁺, Ni²⁺, Zn²⁺, Cu²⁺, Fe³⁺, Co³⁺ oder Cr³⁺), Zinkoctanoat oder - naphthenat, bei Anwesenheit von Co-Katalysatoren mit mindestens einem aktiven Wasserstoffatom als Härterkomponente, z.B. Nonylphenol oder insbesondere primären Aminen, unter Bildung von Cyanuratringen vernetzt. Ein Cyanatesterharz kann auch mit einem Epoxidharz wie oben beschrieben gemischt sein, was die Vernetzung zu Oxazolidinonverbindungen ermöglicht.

Besonders bevorzugte Varianten sind Preforms bildende oder als Preforms erfindungsgemäß verwendete reaktive Materialien, insbesondere das bei Temperaturen 90-100 °C eine Preform bildende und bei Temperaturen von 120 bis 180 °C polymerisierende Epoxymaterial Epikote(R) Trac 06720 oder das bei 70 bis 150 ° C aushärtende EPON Resin 2002 in Kombination mit dem Härter Epon Curing Agent P-101 (Imidazol-Addukt) der Firma Hexion oder eine Mischung aus bei 70 - 80 °C, vorzugsweise 72 - 74 °C schmelzendem Bisphenol-A-Methacrylatmaterial und Dibenzoylperoxid (welches ab ca. 70 °C zersetzt wird und so die Polymerisationsreaktion initiiert).

In allen diesen in einem Klebematerialelement in einer erfindungsgemäß verwendeten reaktiven einkomponentig ausgeführten vernetzbaren reaktiven Materialmischungen können beliebige oder vorzugsweise die vorstehend genannten durch Erwärmen zur vernetzenden Polymerisation aktivierbare Stoffmischungen beinhaltet sein, beispielsweise solche, die optional zur Herstellung von sogenannten Preforms (die in der Regel thermoplastisch sind) bei mäßigem Erwärmen gemäß oder bei vorgefertigtem Preform analog Variante (i), die dann bei erfindungsgemäß obligatorisch vorgesehenem stärkerem Erwärmen (Variante (ii) zu duromeren Körpern aushärten. Von den vernetzbaren reaktiven Materialmischungen sind diejenigen bevorzugt, die ein Temperaturverhalten wie eingangs in Absatz [A] oder in Anspruch 1 oder einem abhängigen Anspruch oder in oben dargelegten spezifischen Definition von solchen Materialien oder Materialmischungen davon zeigen.

Bei dem Reibekörpermaterial (auch als Schleifstoff, Schleifmittel, Abrasiv oder Hartstoff bezeichenbar) kann es sich um ein keramisches (durch Brennen oder Sintern verfestigtes), metallisches (vorzugsweise durch Sintern verfestigtes), halbmetallisches, halbmetall- oder metalloxidisches, halbmetall- und/oder metallhydroxidisches, ein halbmetallcarbidisches, ein halbmetallnitridisches Material oder um Diamant handeln, jeweils als partikuläres und/oder (ferner) faserförmiges Reibkörpermaterial ausgeführt, vorzugsweise mit einer Mohshärte von 7 oder mehr, oder ein Gemisch von zwei oder mehr oder allen davon handeln, beispielsweise um Sand, Silikate, Korund, insbesondere Normalkorund oder Edelkorund, Zirkonkorund, Siliciumcarbid, Bornitrid oder ferner Diamant, oder amorphe Materialien wie Glas (z.B. in Form von Kugeln oder Glassplittern) oder Gemische von zwei oder mehr oder allen davon; wobei jeweils das partikuläre Reibkörpermaterial eine Körnung von F180 bis F7 gemäß dem am Prioritätstag der Anmeldung geltenden FEPA-Standard (FEPA-Standard 45-1:2006) aufweist, beispielsweise eine Körnung von F120 bis F7 (ca. 0,1 bis 3 mm), vorzugsweise von F60 bis F8 (ca. 0,25 bis 2,5 mm), ermittelbar durch Aussieben mittels grobmaschigerer Siebe für die Obergrenze und mittels feinmaschigerer Siebe unter Entfernung des durch das Sieb fallenden Materials für die untere Grenze. Die F-Werte beziehen sich dabei auf die Schleifkörper-Korngrößen gemäß FEPA-Norm (FEPA-Standard 45-1:2006). Alternativ kann das Reibekörpermaterial auch in Form von Festkörpern aus amorphen (z.B: glasartigen) Materialien vorliegen, wie beispielsweise in Form von Glassplittern oder Glaskugeln. Diese Variante ist insbesondere bei der Verwendung an oder in Holz bevorzugt, wo durch die Rotation und die axialen Kräfte das Glas zersplittern und so durch Formung von scharfkantigen Reibekanten für besonders hohe Reibung und damit Reibungswärme sorgen kann. Das Reibekörpermaterial ist vorzugsweise in einem Gewichtsanteil von 10 bis 78 Gew.-%, insbesondere von 30 oder von 40 bis 75 Gew.-% oder bis 60 Gew.-%, zugesetzt.

Mittels des Reibekörpermaterials kann durch rotatorische und/oder axiale Kräfte (und gegebenenfalls zusätzlich bei der Polymerisation entstehende Reaktionswärme) die Temperatur des Klebematerialelements und auch des zu befestigenden Gegenstandes (und ggf. der Wandung der Oberfläche oder des Loches) erhöht werden, vorzugsweise derart, dass eine Temperatur von 41 oder mehr ° C bis zur für die Polymerisation zu einem Duromer benötigten Temperatur oder darüber, beispielsweise von 60 oder mehr °C, insbesondere von 65 Grad Celsius oder mehr, vorzugsweise von 70 bis 150 Grad Celsius (° C) oder von 120 bis 180 Grad Celsius, (mindestens für das Klebematerialelement) erzielt wird.

Dass die Temperaturerhöhung "großenteils durch diese Kräfte hervorgehoben" wird, bedeutet insbesondere, dass ab Einsetzen der Polymerisationsreaktion auch die entstehende Reaktionswärme zur Temperaturerhöhung zusätzlich zur Reibungswärme beitragen oder diese im Verlauf der Befestigung weitgehend oder ganz übernehmen kann.

Zur Erhöhung der Endfestigkeit der ausgehärteten Materialien können weitere Füllstoffe wie feiner Quarzsand, Fasermaterialien, wie insbesondere fein gemahlene Glasfasern (insbesondere einer Länge von 2 bis 10 mm), Zement, insbesondere Portlandzement, oder Nanokorundpartikel zugesetzt sein.

Zur (ebenfalls einen Erfindungsgegenstand bedeutenden) Herstellung eines erfindungsgemäßen oder erfindungsgemäß verwendeten Klebematerialelements (insbesondere Materialkörpers) wird (was ebenfalls Gegenstand der Erfindung ist) wie folgt vorgegangen:
Durch Verpressen seiner pulverförmigen Bestandteile können (mit oder ohne Zugabe eines Schmiermittels, wie Graphit, Bindemittel, wie lediglich C, H und O beinhaltende thermoplastische Kunststoffe, (unmodifizierte oder hydrophobierte) Kieselsäure, MagnesiumAluminiumsilikat, Talkum und/oder Cellulosederivate) entsprechende Materialkörper (beispielsweise in zylindrischer Form) hergestellt werden. Bevorzugt werden als Schmiermittel Wasser, Aceton oder Wasser-Aceton-Mischungen verwendet, die zum einen beim Verpressen ausgepresst werden, zum anderen rasch verdampfen.

Alternativ können die Bestandteile durch Sintern (Verpressen und Aufheizen) bei Temperaturen bis knapp unterhalb der Schmelz- oder Verglasungstemperatur des niedrigsterweichenden Bestandteils zu den Materialkörpern geformt werden.

Auch ein Gießen von Lösungen oder Suspensionen der Bestandteile und anschließendes Trocknen ermöglicht das Formen der Materialkörper (wie bereits dargelegt, sind Wasser- und/oder Aceton-Suspensionen gut geeignet).

In einer besonderen Variante werden die Materialkörper durch Preforming bei Temperaturen von beispielsweise bis zu 120, insbesondere bis 95 °C (entsprechend Variante (i)) (z.B. für Epikote Trac 06720) in einer Form (insbesondere mit beispielsweise zylinderförmigen formgebendem Innenraum), die aus einem geeigneten Material, z.B. einem Metall oder vorzugsweise einem wenig haftfähigen Materials besteht oder im formgebenden Innenraum damit beschichtet ist, wie z. B. Silikon oder Teflon oder einem anderen Trennmittel, wie Graphit, Talkum, Titannitrid oder dergleichen, geformt, mit oder ohne Verpressen. Die resultierenden Preforms sind bevorzugte erfindungsgemäße Materialkörper.

Durch derartiges Preforming herstellbare oder hergestellte Materialkörperelemente oder deren Verwendung bilden bevorzugte Ausführungsformen der Erfindung.

Schließlich können Materialkörper auch aus größeren Stücken des entsprechenden Materials (beispielsweise aus flächigen größeren Stücken mit einer Dicke und Länge, die der Dicke und Länge der herzustellenden Materialkörper entspricht und durch Abschneiden in Abständen, die der Dicke des Materialkörpers entsprechen) beispielsweise durch Zerschneiden hergestellt werden.

Zwei oder mehr der genannten Herstellungsmethoden können auch in geeigneter Weise kombiniert werden.

Die Folienbeutel oder Ampullen können mit den gemischten Bestandteilen der vernetzbaren reaktiven Materialmischung befüllt und dann (beispielsweise durch Zuschmelzen, z.B. mittels Lasererwärmung oder Kontakt mit Heizelementen) verschlossen werden.

Vorteilhafte Ausführungsformen der Erfindung finden sich auch in den Ansprüchen, die hier auch als Bestandteil der Beschreibung anzusehen sind.

Die Figuren sind wie folgt beschrieben:
Fig. 1: Zylinderförmiger erfindungsgemäß zu verwendender Materialkörper in Aufsicht (vergrößert)
Fig. 2: Erfindungsgemäß zu verwendender Highbond Anker in schematischer Aufsicht
Fig. 3: Klebebolzen mit vorgeformter Epoxidplatte in schematischer schräger Aufsicht (Fig. 3 A) und schematisch als Querschnitt entlang der Gewindeachse (Fig. 3 B)
Fig. 4: Hinterschnittanker mit einer vorgeformten scheibenförmigen Epoxidplatte (Fig. 4A) alternativ mit hülsenförmigen (Fig. 4B) und alternativ mit lochscheibenförmigen (Fig. 4C) Epoxidkörpern, jeweils in einem teilweise geschnittenen Längsschnitt (Hülse geschnitten)

Die Erfindung betrifft insbesondere auch die in unabhängigen Ansprüchen und Unteransprüchen dargelegten Ausführungsformen, die (wobei ein oder mehrere oder alle breiteren Begriffe oder Merkmale wie oben erwähnt durch spezifischere Definitionen ersetzt werden können zur Charakterisierung spezifischerer Ausführungsformen der Erfindung) spezielle Ausführungsformen der Erfindung darstellen.

Die nachstehenden Beispiele dienen der Illustration der Erfindung und zeigen auch bevorzugte Ausführungsformen der Erfindung, ohne ihren Umfang zu beschränken.

### Beispiel 1: Herstellung eines erfindungsgemäßen oder erfindungsgemäß zu verwendenden zylindrischen Materialkörpers.

Für einen zylindrischen Materialkörper werden die in der nachfolgenden Tabelle genannten Komponenten als Pulver/Reibkörpermaterialgemisch in eine Form mit zylinderförmigem Hohlraum gegeben und für 0,5 bis 2 Stunden bei ca. 95 °C in einem Ofen zu Epoxidzylinder von 50 mm Länge und 14 mm Durchmesser verschmolzen:

| Material | Gew.-%-Anteil |
|---|---|
| Epikote Trac 06720 (Hexion) | 50 |
| Edelkorund F 014 (EKF14) von Kuhmichel Abrasiv GmbH | 50 |

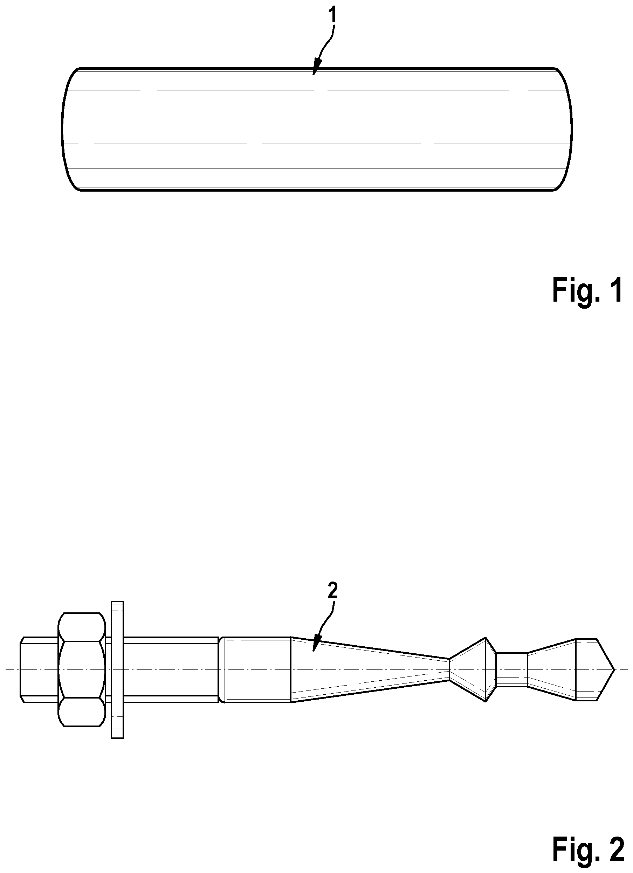

Fig. 1 zeigt (vergrößert, der Durchmesser quer zur Längsachse liegt tatsächlich bei ca. 14 mm) einen nach 0,5 Stunden erhaltenen Materialkörper **1.,** Bei Varianten nach 2 Stunden ist eine stärkere gelbliche Verfärbung sichtbar.

### Beispiel 2: Verwendung eines Epoxidzylinders 1 aus Beispiel 1 zur Befestigung eines Verankerungselements

Eine M12-Gewindestange (hier mit Rechtsgewinde, kann aber auch mit Linksgewinde ausgestattet sein) mit Dachspitze von 12 mm Durchmesser und 160 mm (hier fischer RG M 12 x 160) Länge wird in ein 80 mm tiefes 14-er-Bohrloch in Beton unter schlagendem und rotierendem Setzen eingebracht, in das zuvor ein Materialkörper aus Beispiel 1 von Hand eingesteckt wurde.

Zuerst wird auf übliche Weise ein Bohrloch für einen Verbundanker oder vorliegend eine Gewindestange (Bohrdurchmeser 14 mm für M12-Gewindestange) gebohrt und das Bohrloch gereinigt (4x ausblasen, 4x ausbürsten, 4x ausblasen). In das Bohrloch wird bei Umgebungstemperatur (wie im Beispiel angegeben oder sonst Raumtemperatur) ein vorportionierter Materialkörper aus Beispiel 1 (Epoxid-/Korunddübel) eingeschoben. (Bei tieferen Bohrlöchern können einfach mehrere vorproportionierte Materialkörper eingeschoben werden, die auch kürzer sein können).

Anschließend wird die Ankerstange (Ankerstange fischer RG M, eine Gewindestange) mit einem Bohrhammer (üblicher Typ wie auch zum Einsetzen von Patronen mit Zweikomponenten-Befestigungsmaterialien) schlagend und drehend gesetzt. Durch die Reibungsenergie der Gewindestange am Epoxid und der Bohrlochwandung wird Wärme erzeugt. Verstärkt wird dieser Effekt durch das Reibkörpermaterial (hier Edelkorund), das durch zusätzliche Reibung zwischen Gewindestange, Material des Materialkörpers und Beton die Temperatur weiter auf bis über 120 °C (messbar mittels speziell präparierter innen mit einem Temperatursensor ausgestatteter Ankerstange) steigert. Dadurch härtet das Epoxid in kurzer Zeit (weniger als 10 min) aus.

Eine Setzkontrolle ist über ein Austreten der Epoxidmasse möglich. Um das Austreten der Epoxidmasse gering zu halten, wird in einer Ausführungsform eine Metall- oder Kunststoffscheibe mit Innendurchmesser von 12 mm und Außendurchmesser von 14 mm oder mehr über die Gewindestange auf den Beton gelegt und leicht angepresst.

Alternativ wird eine Linksgewindestange verwendet oder bei Rechtsgewindestange die Drehrichtung der Bohrmaschine umgekehrt.

Das Setzverfahren funktioniert ebenso mit fischer Highbond-Ankerstangen FHB II-A S oder FHB II-A L (2 in Fig. 2) sehr gut.

Mit einer Ankerstange mit M12-Anschlussgewinde wurden beispielsweise folgende Ergebnisse für die Verbundspannung erzielt:

| Verankerungselement mit Materialkörper aus Beispiel 1 | Mittelwert Verbundspannung [MPa] | Versuchsanzahl n | Setzzeit [s] und Drehrichtung Bohrhammer | Harzanteil: Reibkörperanteil | Herstellverfahren | Zeit bis zum Auszug |
|---|---|---|---|---|---|---|
| RG M Rechtsgewinde | 9,3 | 7 | 20 - 30 r | 50:50 | T | 2mal nach 10min; 5mal nach 10h |
| RG M Linksgewinde | 18,6 | 7 | 40 - 50 r | 50:50 | T | nach 12h |
| RG M Rechtsgewinde | 16,7 | 12 | 20-30 I | 50:50 | T | nach 12h |
| FHB II AL | 19,5 | 2 | 20 - 30 r | 50:50 | T | nach 12h |
| RG M Linksgewinde | 21,6 | 5 | 40 - 50 r | 40:60 | T | nach 12h |
| RG M Linksgewinde | 17,6 | 4 | 40 - 50 r | 40:60 | G | nach 12h |
| RG M Linksgewinde bei T_{Beton} = -3,6°C - 0°C | 14,7 | 4 | 50 - 60 r | 50:50 | T | nach 15min |

| | | | | | | |
|---|---|---|---|---|---|---|
| r= rechtsdrehender Bohrhammer; l=linksdrehender Bohrhammer T= im Ofen temperiert bei 95°C für 0,5h; G= unter Zugabe von Wasser verpresst | | | | | | |

Eine Verbesserung der Auszugskräfte zeigt sich mit der Linksgewindestange und rechtsdrehender Bohrmaschine. Hierbei liegt die Vermutung nahe, dass das Epoxid durch das gegenlaufende Gewinde im Bohrloch komprimiert wird (Art Schneckenförderung) und auch durch mehr Reibung und Walken stärker erhitzt wird. Der Setzvorgang dauert hier etwas länger (hier bis 50 %) als bei Rechtsgewinde, so dass mehr Reibungswärme und damit eine höhere Durchschnittstemperatur und durch die Schneckenförderung eine bessere Verdichtung, Durchmischung und damit Aushärtung zu vermuten sind.

Analog wurde im in der nachfolgenden Tabelle beschriebenen Versuch folgende Verbundspannung erhalten:

| | | | |
|---|---|---|---|
| Zusammensetzung und Dimensionen Materialkörper und Bohrloch | Herstellung Materialkörper | Verankerungselement und Art des Gewindes und Eindrehens | Verbundspannung (Mittelwert) |
| 40:60 (Gew.-%) Epikote TRAC 06720 EKF14; Materialkörper: d= 14mm, L=55mm; Bohrloch d=14mm | Materialgemisch in Silikonform im Ofen geschmolzen (0,5h, 95°C) | RG M 12 x 160 Gewindestange, Linksgewinde, rechtsdrehend | 21,6 MPa (N=5) (F_{u,m} = 65,6 kN; d_{cut} =14 mm; heff = 80 mm) |

Die Verbundspannungen wurden wie oben beschrieben gemessen und wie nachfolgend beschrieben berechnet.

Nach 10 min oder 24 Stunden (beides ergab in obigen Versuchen auf demselben Niveau liegende Verbundspannungen) bei Raumtemperatur oder der angegebenen Temperatur wird das Verankerungselement gezogen bis zum Versagen unter Messung der Versagenslast.

Die Verbundspannung (Tau) berechnet sich grundlegend aus der Auszugskraft (F) geteilt durch die (durch Inspektion nach Auszug ermittelbare) Verbundfläche (A): Tau = F/A. Die Verbundfläche (A) ist bei einem Verbundanker die Mantelfläche (M) die mit dem Epoxid in Beton eingeklebt ist: A = M = Pi * d * h, wobei d=12mm und h die Verankerungstiefe ist. Somit kann mit bekannter Verankerungstiefe und gemessener Auszugskraft die Verbundspannung berechnet werden.

Auch in anderen Versuchen mit anderen Materialmischungen und/oder anderen Gewichtsverhältnissen von reaktivem Material zu Reibkörpermaterial konnten Verbundspannungen von mindestens 10 MPa, besser 22 MPa und höher erreicht werden.

### Beispiel 3: Klebebolzen und seine Befestigung

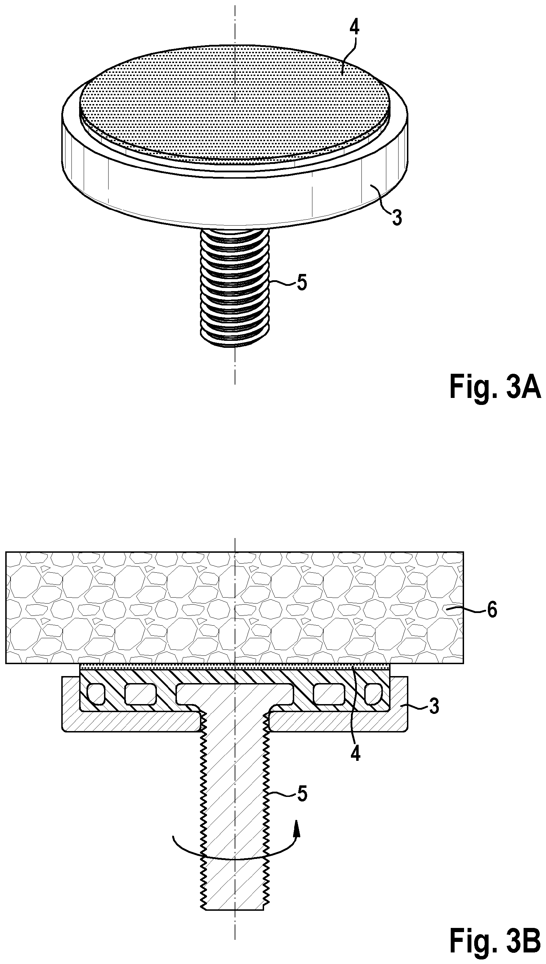

Fig. 3 zeigt einen Klebebolzen 3 mit vorgeformter Epoxidmaterialplatte 4 als Klebematerialelement und einem Gewinde 5, das im auf ein Substrat (hier Beton 6) aufgebrachten Zustand von der dem Substrat abgewandten Seite des Klebebolzens weg ragt, so dass daran dann Gegenstände befestigt werden können.

Zur Befestigung des Klebebolzens wird dieser durch Festklemmen des Gewindes 5 in einem Bohrfutter einer Bohrmaschine und Drehen mittels der Bohrmaschine unter Drücken gegen den Beton über die hierbei aufschmelzende und zu Duromeren reagierende vorgeformte Epoxidmaterialplatte (die analog dem Material aus Beispiel 1 zusammengesetzt ist) erhitzt und so unter Duromerbildung festgeklebt.

### Beispiel 4: Hinterschnittanker

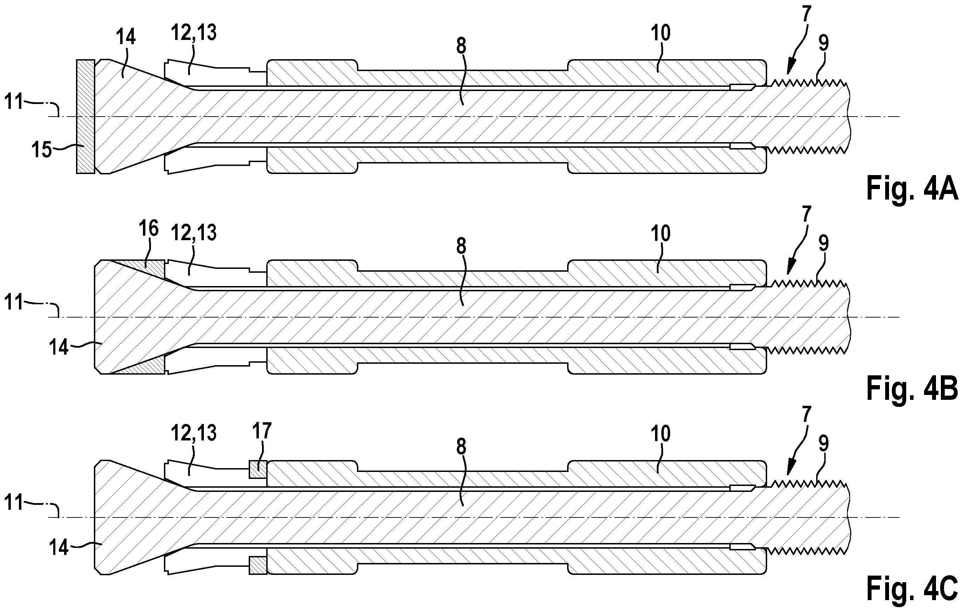

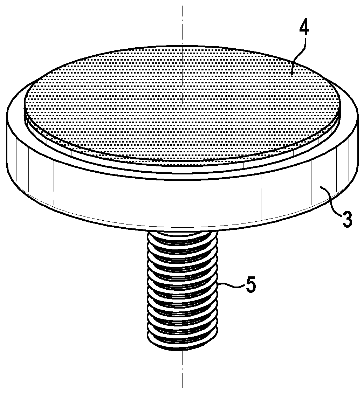

Fig. 4 zeigt Ausführungsformen eines Hinterschnittankers 7 mit einem Schaft 8 mit einem Gewinde 9, an dem Gegenstände, beispielsweise mittels einer Mutter (nicht dargestellt), befestigt werden können und einer Hülse 10, die den Schaft 8 umgibt und um eine Längsachse 11 des Schafts 8 drehbar ist. Die Hülse 10 ist an ihrem vorderen Ende 12 geschlitzt, wodurch Spreizelemente 13 gebildet sind, die durch Aufschieben des vorderen Endes 12 der Hülse 10 auf einen Spreizkonus 14 des Schafts 8 aufspreizbar sind. Am Schaft 8 oder der Hülse 10 ist eine vorgeformte scheibenförmige Epoxidmaterialplatte 15 (Fig 4A), eine vorgeformte Hülse 16 (Fig. 4B) oder ein lochscheibenartiger Körper 17 (Fig. 4C) als Klebematerialelement angeordnet, wobei diese Ausformungen der Klebematerialelemente auch in Kombination angeordnet sein können.

Zur Befestigung des Hinterschnittankers 7 in einem Bohrloch wird der Schaft 8 relativ zum Bohrloch gedreht oder aber die Hülse 10 relativ zum Schaft 8 und zum Bohrloch, wodurch die Epoxidelemente 15, 16, 17 durch Reibung erhitzt werden und unter Duromerbildung das Bohrloch zumindest abschnittsweise ausfüllen und den Hinterschnittanker 7 im Bohrloch festkleben. Zusätzlich wird die Hülse 10 auf den Spreizkonus 14 aufgeschoben, so dass die Spreizelemente 13 aufspreizen und in einen bestehenden Hinterschnitt des Bohrlochs eingreifen oder diesen Hinterschnitt in bekannter Art im Bohrloch ausfräsen, wobei weitere Reibungswärme entsteht. Somit erfolgt eine kombinierte stoff- und formschlüssige Verankerung des Hinterschnittankers 7 im Bohrloch.

## Patentansprüche

1. Verwendung eines Klebematerialelementes zum Befestigen eines Gegenstands in einem Loch und/oder an einer Oberfläche jeweils von einem festen Substrat, wobei das Klebematerialelement ein bei Umgebungstemperatur und Temperaturen oberhalb der Umgebungstemperatur plastisch und/oder elastisch formbeständiger (in diesem Sinne also fester) Materialkörper, oder (ferner)_eine Ampulle (im Befestigungsbereich auch als Patrone bezeichnet) oder ein Folienbeutel ist, und wobei das Klebematerialelement eine (bezüglich der an einer Polymerisation teilnehmenden Bestandteile) einkomponentig ausgeführte bei einer Temperaturerhöhung durch Polymerisation vernetzbare reaktive Materialmischung und.ein partikuläres Reibkörpermaterial beinhaltet; wobei die Materialmischung des Klebematerialelementes
(i) optional reibungsbedingt durch rotatorische und/oder axiale Kräfte bei 41 oder mehr Grad Celsius vermehrt plastisch bis zähflüssig werdend
und in jedem Fall (ii) bei einer ganz oder großenteils durch rotatorische und/oder axiale Kräfte hervorgerufenen Temperaturerhöhung auf mehr als 60 Grad Celsius, insbesondere auf 65 Grad Celsius oder mehr, zu einem Duromer aushärtend ausgeführt ist;
und wobei das Klebematerialelement und der Gegenstand drehend und/oder unter axialem Drücken in das Loch ein- und/oder auf die Oberfläche aufgebracht werden.

2. Verwendung nach Anspruch 1, wobei der Gegenstand
(a) im Falle eines drehend in einem Loch zu befestigenden Gegenstands im Gegensinn zu einem daran ausgebildeten im Loch einzubringenden Gewinde oder
(b) im Falle eines drehend in einem Loch zu befestigenden Gegenstands, der eine Hülse und einen Schaft aufweist, der Schaft oder die Hülse relativ zum Schaft oder
(c) im Falle eines an einer Oberfläche anzubringenden Gegenstandes im Gegensinn zu einem an dessen anzuklebender Oberfläche spiralförmig vom zentralen Bereich bis außen verlaufenden Steg gedreht wird;
und/oder der zum Befestigen vorgesehene Gegenstand aus einem Faserverbundwerkstoff oder Metall ist.

3. Verwendung nach Anspruch 1 oder 2, wobei das Klebematerialelement ein bei Umgebungstemperatur und Temperaturen oberhalb der Umgebungstemperatur plastisch und/oder elastisch formbeständiger Materialkörper, insbesondere in Form eines länglichen, vorzugsweise zylindrischen Materialkörpers oder ferner in Form eines scheibenförmigen, lochscheibenförmigen, hülsenförmigen, quaderförmigen, kugelförmigen oder bandförmigen Materialkörpers, ist.

4. Verwendung nach einem der vorstehenden Ansprüche, wobei das Klebematerialelement als zylinderförmiger Materialkörper ausgebildet ist.

5. Verwendung nach einem der vorstehenden Ansprüche, wobei das partikuläre Reibkörpermaterial eine Körnung von F120 bis F7, vorzugsweise von F60 bis F7 nach FEPA-Standard 42-1:2006 aufweist.

6. Verwendung nach einem der Ansprüche 1 bis 3, wobei ein plastisch und/oder elastisch formbeständiger Materialkörper in Form eines Pfropfens oder Materialklumpens verwendet wird.

7. Verwendung nach einem der vorstehenden Ansprüche, wobei eine Ampulle oder ein Folienbeutel verwendet wird, die jeweils die Stoffmischung beinhalten.

8. Verwendung nach einem der vorstehenden Ansprüche, wobei das Reibkörpermaterial ein partikuläres Reibkörpermaterial ausgewählt aus Sand oder vorzugsweise aus Korund, insbesondere Normalkorund oder Edelkorund, Zirkonkorund, Siliciumcarbid, Bornitrid, Diamant und Glaspartikeln, wie Glaskugeln, oder Mischungen von zwei oder mehr dieser Reibmaterialien, ist.

9. Verwendung nach einem der vorstehenden Ansprüche, wobei es sich bei der Befestigung des Gegenstandes um die Befestigung eines Verankerungselements aus einem Faserverbundwerkstoff oder insbesondere Metall in einem Loch, insbesondere Bohrloch, in einem festen Bausubstrat, insbesondere Mauerwerk oder Beton oder Holz, als festem Substrat, wobei das Klebematerialelement vor oder mit dem Verankerungsmittel in das Loch eingebracht wird und das Verankerungsmittel schlagend, drehend oder schlagend und drehend eingebracht wird, wobei die nötige Temperaturerhöhung zur Aushärtung zum Duromer bewirkt wird; wobei, falls das Verankerungselement ein ins Loch zu verbringendes Gewinde aufweist, die Drehung vorzugsweise entgegen dem Drehsinn des Gewindes erfolgt.

10. Verwendung nach einem der Ansprüche 1 bis 5 zum Befestigen eines Gegenstands an einer Oberfläche eines festen Substrates, wobei das Klebematerialelement auf die Oberfläche oder den Gegenstand aufgebracht wird und der Gegenstand drehend und unter Kraftaufwendung in Richtung der Oberfläche auf den Materialkörper oder die Folie aufgebracht wird, wobei die nötige Temperaturerhöhung zur Aushärtung zum Duromer bewirkt wird.

11. Verwendung nach einem der vorstehenden Ansprüche, wobei die vernetzbare reaktive Materialmischung, insbesondere ein Binderpulver, bei Temperaturen von unter 40 °C ein kristallines, teilkristallines oder amorphes festes polymerisierbares Harz und einen kristallinen, teilkristallinen oder amorphen festen oder granulären oder flockenförmigen Härter dafür beinhaltet, oder wobei der Materialkörper als Preform vorliegt.

12. Verwendung nach Anspruch 8, wobei das kristalline, teilkristalline oder amorphe feste Harz ein Methacrylat ist, insbesondere Bisphenol-A-Dimethacrylat, und der Härter ein organisches Peroxid oder ein Azohärter, insbesondere Dibenzoylperoxid, Di(4-tert-butyl-cyclohexyl)-peroxydicarbonat, Diacetyl-peroxidicarbonat, Dimyristylperoxydicarbonat, Dilauroyl-peroxid, Didecanoylperoxid, 2,2'-Azodiisobutyronitril, 2,2'-Azodi-(2-methylbutyronitril), Dicumylperoxid, Di-(2-tert-butyl-peroxyisopropyl)-benzol oder 2,5-Dimethyl-2,5-di(tert-butylperoxy)-hexin-3 beinhaltet; oder
worin das Harz ein epoxybasiertes vernetzbares Material, insbesondere Epikote Trac 06720 oder ein BisphenolA/EPichlorhydrinbasiertes Epoxidharz ist, und der Härter ein latenter Härter, insbesondere ein Säureanhydrid oder ein Imidazolderivat, insbesondere ein Imidazoladdukt, ist, wobei das epoxybasierte vernetzbare Material ohne vorherige Erwärmung oder als Produkt einer ersten Erwärmung analog Schritt (i) in Anspruch 1 in Form eines Preforms vorliegen kann.

13. Klebematerialelement in Form eines plastisch und/oder elastisch formbeständigen Materialkörpers, welcher bei Umgebungstemperatur und Temperaturen (mindestens geringfügig) oberhalb der Umgebungstemperatur plastisch und/oder elastisch formbeständig ist, wobei das Klebematerialelement eine (bezüglich der an einer Polymerisation teilnehmenden Bestandteile) einkomponentig ausgeführte bei einer Temperaturerhöhung durch Polymerisation vernetzbare reaktive Materialmischung und.ein partikuläres Reibkörpermaterial beinhaltet; wobei die Materialmischung des Klebematerialelementes
(i) optional reibungsbedingt durch rotatorische und/oder axiale Kräfte bei 41 oder mehr Grad Celsius bis zu 120 Grad Celsius, vorzugsweise von 60 bis 110 oder bis 100 Grad Celsius, vermehrt plastisch bis zähflüssig werdend
und in jedem Fall (ii) bei einer ganz oder großenteils durch rotatorische und/oder axiale Kräfte hervorgerufenen Temperaturerhöhung auf mehr als 60 Grad Celsius, insbesondere auf 65 Grad Celsius oder mehr, vorzugsweise von 70 bis 150 Grad Celsius oder von 120 bis 180 Grad Celsius, zu einem Duromer aushärtend ausgeführt ist.

14. Klebematerialelement in Form eines Materialkörpers nach Anspruch 13, wobei die vernetzbare reaktive Materialmischung (a1) ein als Preform oder als Binderpulver, insbesondere als Preform, ausgeführtes Vinylesterharz, das bei Temperaturen insbesondere von -40 bis 80 °C, vorzugsweise von bis hinauf zu 50 °C, insbesondere von bis hinauf zu 40 °C plastisch und/oder elastisch verformbar ist und einen Initiator ausgewählt aus einem radikalbildenden Peroxid und einer radikalbildenden Azoverbindung, vorzugsweise gemischt mit einem Phlegmatisierungsmittel ;
oder insbesondere (b1) ein epoxybasiertes als Preform oder als Binderpulver, insbesondere als Preform, ausgeführtes Material beinhaltend ein Epoxidharz und einen Härter für die Polyaddition zum Aushärten, oder
(c1) ferner ein als Preform oder als Binderpulver ausgeführtes Polyimid-, insbesondere Bismaleinimidharz
beinhaltet.

15. Klebematerialelement in Form eines Materialkörpers nach Anspruch 13 oder 14, wobei der Materialkörper ein länglicher und/oder flacher Materialkörper, vorzugsweise in Form eines länglichen, insbesondere zylindrischen Materialkörpers oder ferner in Form eines scheibenförmigen, lochscheibenförmigen, hülsenförmigen, quaderförmigen, klumpenförmigen, kugelförmigen oder bandförmigen Materialkörpers ist.

16. Klebematerialelement in Form eines Materialkörpers nach einem der Ansprüche 13 bis 15, wobei es als partikuläres oder und/oder faserförmiges Reibkörpermaterial Sand oder vorzugsweise aus Korund, insbesondere Normalkorund oder Edelkorund, Zirkonkorund, Siliciumcarbid, Bornitrid, Diamant und Glaspartikeln, wie Glaskugeln, oder Mischungen von zwei oder mehr davon, beinhaltet.
